# DEMANDE DE BREVET EUROPEEN

(11) **EP 2 397 424 A1**
(43) Date de publication de la demande: **21.12.2011**
(21) Numéro de dépôt: 10447014.1
(22) Date de dépôt: 16.06.2010
(51) Int. Cl.: B65G 15/32, F16G 3/10, G09F 11/12

(54) **Procédé pour l'installation et la désinstallation d'une bande transporteuse**

(71) Demandeur: Hahn, André, 1501 Buizingen (BE)
(72) Inventeur: Hahn, André, 1501 Buizingen (BE)
(74) Mandataire: Cauchie, Daniel

(57) **Abrégé**

L'invention se rapporte à un procédé pour l'installation et la désinstallation d'une bande transporteuse (5) sur des rouleaux d'entraînement (1) par l'intermédiaire d'une bande support (2) sans fin tendue sur ces rouleaux d'entraînement, en particulier une bande transporteuse d'un comptoir caisse, en vue d'assurer un défilement de cette bande transporteuse laquelle présente une face externe, une face interne et deux extrémités transversales (15 ; 16).

L'invention est caractérisée en ce que pour réaliser l'installation, on solidarise entre elles la bande transporteuse et la bande support par l'intermédiaire de leur face externe et d'un moyen de jonction (14) faisant charnière entre ces deux bandes puis on solidarise entre elles les deux extrémités transversales de la bande transporteuse par l'intermédiaire d'un moyen de jonction (17) appliqué sur la face externe de cette bande et chevauchant ces extrémités juxtaposées.

## Description

La présente invention se rapporte, d'une manière générale, à un procédé pour l'installation et la désinstallation d'une bande transporteuse sur des rouleaux d'entraînement.

En particulier, l'invention concerne un procédé pour l'installation et la désinstallation d'une bande transporteuse sur des rouleaux d'entraînement par l'intermédiaire d'une bande support sans fin tendue sur ces rouleaux d'entraînement, en particulier une bande transporteuse d'un comptoir caisse, en vue d'assurer un défilement de cette bande transporteuse laquelle présente une face externe, une face interne et deux extrémités transversales.

L'installation d'une bande transporteuse au niveau d'un comptoir caisse, par exemple un comptoir caisse d'un supermarché ou de tout autre magasin, nécessite, généralement, diverses manipulations, notamment l'ouverture du comptoir et le démontage de divers accessoires, avant d'accéder librement aux rouleaux destinés à supporter et à entraîner la bande qui doit y être posée et tendue. Habituellement l'ensemble de toutes les opérations nécessaires à cette fin depuis l'ouverture jusqu'à la fermeture du comptoir requiert de 40 à 120 minutes. Comme la durée de vie opérationnelle d'une bande transporteuse de comptoir caisse n'excède pas 6 mois d'utilisation, il apparaît primordial de réduire au maximum le temps nécessaire à la désinstallation d'une bande usagée et à son remplacement par une bande neuve de façon à diminuer la durée de l'interruption d'usage du comptoir caisse et minimiser d'autant les désagréments ainsi occasionnés au personnel.

On a décrit dans la demande de brevet WO 2006/066087 une méthode pour installer une bande transporteuse sur une bande support. Selon cette méthode, on fixe à la bande support une portion périphérique de la bande transporteuse comprenant à la fois des portions longitudinales et des portions transversales, ces dernières étant juxtaposées lorsque la bande transporteuse est tendue longitudinalement sur la bande support. Cette fixation peut être opérée par application, sur la face externe de la bande support et sur la face interne de la bande transporteuse, d'un adhésif époxy, d'un adhésif sensible à la pression, de bandelettes adhésives double face, c'est-à-dire dont les faces opposées sont recouvertes d'un matériau adhésif, ou encore d'un système de bandelettes auto agrippantes de type Velcro^{®}.

Plusieurs essais préliminaires ont été entrepris, dans le cadre de la présente invention, en vue de fixer, de manière efficace, simple et rapide, une bande transporteuse à une bande support. A cet effet, on a expérimenté diverses méthodes, dont celle décrite dans la demande de brevet précitée A cet effet, on a mis en oeuvre différents type de matériaux ou systèmes adhésifs notamment une colle du genre époxy appliquée entre la face externe de la bande support et la face interne de la bande transporteuse ou encore des bandelettes adhésives double face elles-mêmes disposées entre la face externe de la bande support et la face interne de la bande transporteuse.

L'utilisation de matériaux adhésifs du genre colle a montré que, lors du décollage de la bande transporteuse en vue par exemple de la renouveler, des traces de ce matériau adhésif subsistent généralement sur la face externe de la bande support, traces qu'il s'avère nécessaire d'éliminer, par exemple avec des solvants, avant d'effectuer la pose et la fixation d'une nouvelle bande transporteuse sur la bande support. En outre, lors de l'utilisation de bandelettes adhésives double face, on a enregistré une mauvaise fixation de celles-ci à la face interne de la bande transporteuse dont l'aspect généralement rugueux et irrégulier empêche toute adhérence de bonne qualité.

En outre, il a été observé, lors de l'élaboration de la présente invention, que la fixation de la totalité de face interne de la bande transporteuse sur la face externe de la bande support provoque, lors du défilement de ces deux bandes solidarisées, des tensions et étirements amenant des déformations de l'ensemble lorsqu'il passe sur les rouleaux d'entraînement. Un résultat analogue a également été enregistré lorsque différentes portions de la bande transporteuse, réparties sur toute sa longueur, sont fixées à la bande support selon la méthode décrite dans la demande de brevet WO 2006/066087 citée précédemment.

Dans cette demande de brevet, deux portions de la bande transporteuse sont définies respectivement à chacune des extrémités transversales de celle-ci. Chacune de ces portions, dont la largeur déterminée selon l'axe transversal de la bande équivaut à la largeur de la bande transporteuse et dont la longueur déterminée selon l'axe longitudinal est d'environ 15 cm, est recouverte sur sa face interne d'un moyen adhésif pour être fixée à la face externe de la bande support. Par conséquent, la bande transporteuse est fixée transversalement à la bande support par l'intermédiaire d'une zone dont la largeur est représentée par la largeur de ces bandes, la longueur, dans le sens longitudinal, étant d'environ 30 cm.

La présente invention a pour but de proposer un procédé, du type indiqué précédemment, capable à la fois de pallier les inconvénients ci-dessus en ce qu'il permet d'effectuer une installation et une désinstallation d'une bande transporteuse de manière significativement plus rapide que selon le procédé antérieur, en évitant l'apparition de phénomènes d'étirement, de tension ou autres déformations et en éliminant la nécessité d'utiliser la face interne rugueuse de la bande transporteuse et ce, tout en offrant une fixation solide de cette bande transporteuse à la bande support.

Pour atteindre ce but, le procédé selon l'invention est caractérisé en ce que, l'on réalise l'installation par l'intermédiaire de la face externe de la bande support, de la face externe de la bande transporteuse et de moyens de jonction.

Selon une caractéristique supplémentaire de l'invention, pour réaliser l'installation, on solidarise entre elles la bande transporteuse et la bande support par l'intermédiaire de leurs faces externes et d'un moyen de jonction faisant charnière entre ces deux bandes.

En outre, selon une autre caractéristique de l'invention le moyen de jonction faisant charnière est représenté par au moins une bandelette adhésive.

Dans le cadre de la présente description et des revendications, on entend par « face interne » la face, d'une bande support, d'une bande transporteuse ou d'une bandelette adhésive tournée, vers les rouleaux d'entraînement et par « face externe » la face, d'une bande support, d'une bande transporteuse ou d'une bandelette adhésive, non tournée vers les rouleaux d'entraînement.

De même, on entend par « bandelette adhésive » un système adhésif comprenant une feuille support, par exemple, une feuille de matière naturelle ou synthétique telle qu'une feuille de tissu ou de matière plastique relativement souple, dont l'une des faces est recouverte d'une matière adhésive. Cette matière adhésive sera chimiquement neutre vis-à-vis des composants de la bande support et de la bande transporteuse avec lesquels il sera amené à entrer en contact.

Ainsi, la solidarisation de la bande transporteuse à la bande support s'opère, selon l'invention, uniquement par l'intermédiaire de la face externe de chacune de ces bandes à l'exclusion de tout contact adhésif entre celles-ci. Cette solidarisation peut être entreprise par l'intermédiaire d'au moins une bandelette adhésive, habituellement une seule bandelette, disposée à la fois sur la face externe de la bande support et sur la face externe de la bande transporteuse. Cette bandelette adhésive fait ainsi office de charnière entre la bande support et la bande transporteuse.

Un tel mode de réalisation, qui permet d'éviter tout contact adhésif entre la bande transporteuse et la bande support élimine, en conséquence, toute possibilité de déformation capable d'apparaître lors de l'adhérence de ces bandes entre elles.

Ainsi, selon un mode de réalisation préféré de l'invention, on solidarise entre elles la bande transporteuse et la bande support par application d'une bandelette adhésive chevauchant à la fois une première portion de la face externe de cette bande transporteuse, cette première portion étant située à l'une des extrémités transversales de cette bande transporteuse, et une portion de la face externe de cette bande support.

Par ailleurs, selon une autre caractéristique de l'invention, pour réaliser l'installation, la bande transporteuse étant solidarisée à la bande support, les deux extrémités transversales de cette bande transporteuse sont elles-mêmes solidarisées entre elles par l'intermédiaire d'un moyen de jonction appliqué sur la face externe de cette bande et chevauchant ces extrémités juxtaposées.

Selon une autre caractéristique de l'invention, le moyen de jonction est représenté par au moins une bandelette adhésive.

Ainsi, la solidarisation entre elles des deux extrémités transversales de la bande transporteuse s'opère non pas par adhérence, entre elles, de portions d'extrémités transversales mais par l'intermédiaire d'un moyen de jonction, habituellement au moins une bandelette adhésive, généralement une seule bandelette, appliqué sur la face externe de cette bande et chevauchant ces deux extrémités juxtaposées. Cette bandelette adhésive est habituellement analogue à celle utilisée pour solidariser la bande transporteuse à la bande support.

En conséquence, selon un autre mode de réalisation préféré de l'invention, la bande transporteuse étant solidarisée à la bande support et tendue longitudinalement sur celle-ci et les deux extrémités transversales de cette bande transporteuse étant amenées en juxtaposition, on solidarise entre elles lesdites extrémités transversales par application, sur la face externe de ladite bande transporteuse, d'une bandelette adhésive chevauchant ces deux extrémités transversales et recouvrant une deuxième et une troisième portion de cette face externe déterminées respectivement à ces deux extrémités transversales.

A la lumière de ce qui précède, on observe que le procédé selon l'invention, pris dans son ensemble, fait intervenir, à quelqu'étape que se soit de sa mise en oeuvre, uniquement des bandelettes adhésives et les faces externes des bandes support et transporteuse à l'exclusion de leurs faces internes.

Toutefois, l'adhérence de ces bandes adhésives, aux faces externes des bandes support et transporteuse n'atteindra son maximum d'efficacité que si ces faces ne présentent pas ou très peu de rugosité ou d'irrégularités aux endroits ou ces bandes adhésives doivent être posées.

En conséquence, selon une caractéristique supplémentaire de l'invention, les bandelettes adhésives sont posées sur des zones planes de la face externe de la bande support et de la face externe de la bande transporteuse.

Les bandelettes adhésives, qui interviennent dans le procédé de l'invention, présentent avantageusement une largeur, dans le sens transversal des bandes support et transporteuse, équivalant, de préférence, à la largeur de ces bandes. Toutefois, ces bandelettes peuvent être morcelées, si nécessaire, en plusieurs portions juxtaposées ou non.

D'autre part, la longueur de ces bandelettes, déterminée dans le sens longitudinal des bandes, sera suffisamment importante pour assurer une fixation solide d'une part de la bande transporteuse à la bande support et d'autre part des extrémités entre elles de le bande transporteuse, sans toutefois excéder, de préférence, certaines limites dictées essentiellement par les rouleaux d'entraînement. En fait, une bandelette adhésive présentant une certaine rigidité et une longueur trop importante risque de créer des zones de tension et, en conséquence, de faiblesse lors de son passage sur les rouleaux d'entraînement. Ce phénomène pourrait amener, comme conséquence, des détériorations au niveau de la zone d'adhérence des bandes adhésives sur les bandes transporteuse et de support.

Pour cette raison, et selon une autre caractéristique de l'invention, la longueur cumulée de la première portion de face externe de la bande transporteuse et de la portion de face externe de la bande support équivaut au maximum à la longueur du diamètre des rouleaux d'entraînement.

Semblablement, selon une caractéristique supplémentaire de l'invention, la longueur cumulée des deuxième et troisième portions de la face externe de la bande transporteuse équivaut au maximum à la longueur du diamètre des rouleaux d'entraînement.

Pour réaliser la désinstallation de la bande transporteuse, on enlève les bandes adhésives, par exemple par arrachage, et on élimine la bande transporteuse.

A la lumière de la description précédente et selon une mise en oeuvre préférée de l'invention :
A) pour réaliser l'installation :
   a) l'on solidarise entre elles la bande transporteuse et la bande support par application d'une bandelette adhésive chevauchant à la fois une première portion de la face externe de cette bande transporteuse, cette première portion étant située à l'une des extrémités transversales de cette bande transporteuse, et une portion de la face externe de cette bande support,
   b) la bande transporteuse étant solidarisée à la bande support et tendue longitudinalement sur celle-ci et les deux extrémités transversales de cette bande transporteuse étant amenées en juxtaposition, on solidarise entre elles lesdites extrémités transversales par application, sur la face externe de ladite bande transporteuse, d'une bandelette adhésive chevauchant ces deux extrémités transversales et recouvrant une deuxième et une troisième portion de cette face externe déterminées respectivement à ces deux extrémités transversales,
B) pour réaliser la désinstallation, on enlève les bandes adhésives puis on élimine la bande transporteuse.

La bande support utilisée dans le cadre de la présente invention comprend habituellement une feuille support antistatique en matériau souple, par exemple une feuille en tissu ou en feutre tissé, capable de réduire le phénomène d'étirement ou plus généralement une feuille en un matériau présentant une grande résistance à la traction ainsi qu'une grande stabilité dimensionnelle ou de forme comme peuvent présenter certains polyesters. Cette feuille support est généralement revêtue d'une couche de matériau souple qui définit la face externe plane et exempte de rugosités de la bande support. Il peut s'agir, par exemple d'un élastomère naturel ou synthétique comme le caoutchouc naturel ou synthétique ou d'un matériau polymérique thermoplastique tel que le chlorure de polyvinyle ou le polyuréthane.

Cette bande support, dont les extrémités sont rapprochées l'une de l'autre jusqu'à former une bande sans fin, est posée sur des rouleaux d'entraînement et tendue sur ceux-ci. Cette fixation est habituellement réalisée par tout moyen approprié, par exemple par agrafage ou thermo soudure haute fréquence.

Quant à la bande transporteuse, celle-ci est également composée, pour l'essentiel, d'une feuille support antistatique en un matériau souple telle qu'une feuille en tissu ou en feutre tissé capable de présenter une grande résistance à la traction, à l'abrasion et au vieillissement ainsi que de réduire le phénomène d'étirement. Habituellement, cette feuille aura les mêmes qualités que la feuille utilisée pour la bande support en ce qu'elle présentera une grande résistance à la traction et aux déformations tridimensionnelles. Il pourra s'agir par exemple d'une feuille en tissu antistatique, feutre tissé antistatique ou polyester.

Cette feuille est revêtue d'une couche de matériau souple qui définit la face externe de la bande transporteuse. Ce revêtement est obtenu à partir d'un élastomère naturel ou synthétique comme le caoutchouc naturel ou synthétique ou d'un matériau polymérique thermoplastique tel que le chlorure de polyvinyle ou le polyuréthane. Ce dernier constitue un matériau particulièrement préféré lorsque ce revêtement est prévu pour recevoir une impression d'images tel qu'il est décrit dans la demande de brevet EP 1 788 544. Dans ce cas, le polyuréthane destiné à recueillir cette impression sera, au départ, de préférence de couleur blanche, cette teinte provenant habituellement de colorants ou pigments intégrés directement dans la masse.

D'ordinaire, le revêtement de polyuréthane est obtenu par application de polymère pulvérulent sur la feuille support, chauffage jusqu'à liquéfaction et répartition uniforme sur celle-ci. Cette méthode présente toutefois le désavantage de produire une couche non homogène de polymère en raison de la présence de bulles d'air qui subsistent dans la masse ou qui s'introduisent au travers de la feuille support perméable. Ces bulles sont ainsi responsables de faiblesses au sein de cette couche se traduisant par l'apparition de craquelures suite au défilement de la bande transporteuse et notamment par suite de son transit sur les rouleaux d'entraînement.

Cependant, il a été mis en évidence, dans le cadre de la présente invention, que l'utilisation de polyuréthane sous forme de pâte déposée sur la feuille support de la bande transporteuse puis chauffée jusqu'à fluidification et répartie uniformément sur cette feuille support permet de pallier cet inconvénient et ainsi de prolonger la longévité de la bande transporteuse. Cette bande, après fabrication, présente une face externe visible parfaitement plane et exempte de rugosités qui peut être utilisée telle quelle ou, de préférence, recouverte de zones de coloration pouvant mêler signes d'écriture et motifs graphiques décoratifs ou non qui correspondent, par exemple, à des marques, slogans, annonces publicitaires ou non ou encore informations quelconques portées à l'attention du public.

Habituellement, ces zones de colorations sont obtenues par impression selon le procédé décrit dans la demande de brevet EP 1 977 982 dont les étapes peuvent se résumer comme suit :
a) dégraissage de la bande transporteuse en question au niveau de la face destinée à recevoir l'impression,
b) traitement par laser excimère de ladite face de manière à en augmenter l'énergie de surface,
c) création d'une image numérique, par exemple une image en relation avec une annonce publicitaire, et son stockage sur un milieu approprié,
d) transmission de cette image numérique à un traceur ou imprimante,
e) impression de cette image sur ladite face par formation d'au moins une couche d'encre obtenue par projection de celle-ci à partir du traceur ou imprimante,
f) séchage de l'encre utilisée pour l'impression et ce, par rayonnement ultraviolet ou en présence d'oxygène selon la nature de l'encre,
g) recouvrement de ladite face au moyen d'au moins une couche de matériau ou d'un mélange de matériaux protecteurs de l'image imprimée,
h) séchage de la couche de matériaux protecteurs.

L'invention sera mieux comprise et d'autres buts, caractéristiques et avantages de celle-ci apparaîtront plus clairement au cours de la description explicative qui va suivre faite en référence aux dessins schématiques annexés donnés uniquement à titre d'exemple non limitatif illustrant un mode de réalisation de l'invention et dans lesquels:
- la figure 1 est une représentation schématique en coupe d'une bande transporteuse posée et tendue, selon l'état de la technique, sur une bande support installée sur des rouleaux d'entraînement,
- la figure 2 est une représentation schématique partielle et en coupe d'une bande transporteuse à la figure 1 posée sur une bande support,
- la figure 3 est une représentation schématique de l'étape de revêtement dans le procédé de fabrication d'une bande transporteuse,
- la figure 4 est une représentation schématique en coupe d'une bande transporteuse solidarisée selon l'invention à une bande support,

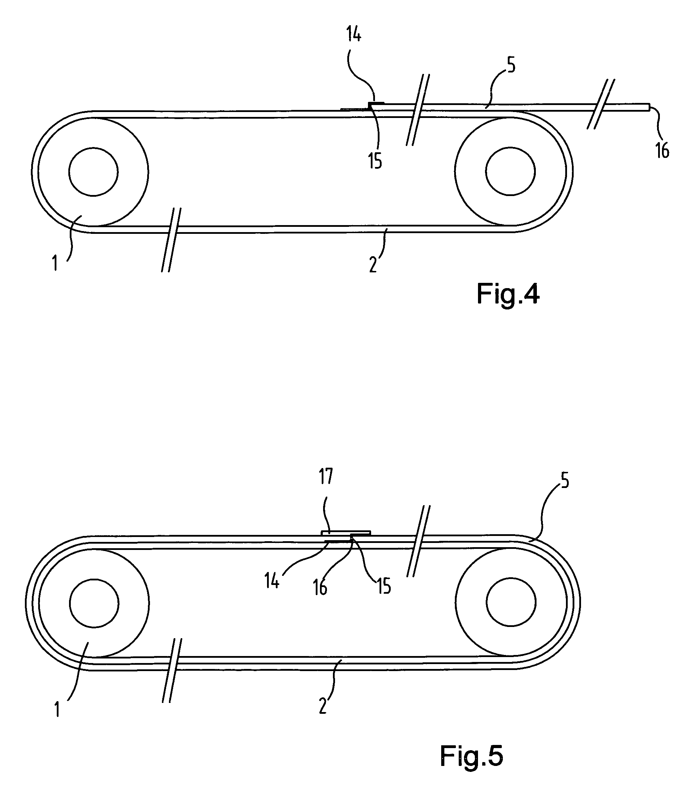

- la figure 4 est une représentation schématique en coupe de la bande transporteuse à la figure 4 tendue sur la bande support.

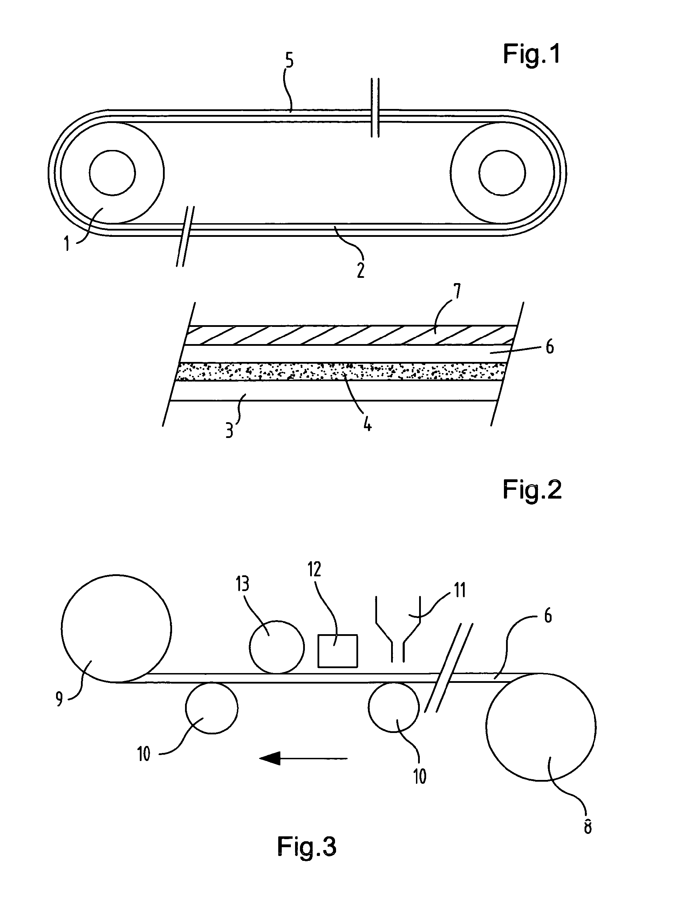

Tel que représenté à la figure 1, des rouleaux 1 capables de tourner sur leur axe sous l'action d'un dispositif quelconque d'entraînement (non visible) tel qu'un moto réducteur, soutiennent une bande support 2 sans fin qui y est posée et tendue. Celle-ci est formée, comme illustré à la figure 2, d'une feuille support 3 en tissu technique d'une longueur d'environ 3350 cm sur laquelle un revêtement 4 de chlorure de polyvinyle est appliqué de manière uniforme pour former une surface plane.

La figure 1 montre également, simplement posée sur la totalité de la bande support, une bande transporteuse 5 comprenant, comme visible à la figure 2, une feuille support 6 en tissu technique surmontée d'un revêtement 7 en polyuréthane réparti de façon plane et uniforme et supportant une impression d'images (non visibles).

Cette bande transporteuse 5 peut être fabriquée, tel que représenté à la figure 3, à partir d'une feuille support 6 se déroulant en continu en provenance d'un dévidoir 8 vers une bobine 9 d'enroulement après passage sur un ou plusieurs rouleaux support 10. Lors de son parcours, cette feuille support reçoit, par l'intermédiaire d'un injecteur 11, une quantité donnée de polyuréthane sous forme d'une pâte teintée en blanc dans la masse. Cette pâte fluidifiée par un dispositif quelconque de chauffage 12 forme une couche de polyuréthane qui est répartie uniformément par l'intermédiaire du rouleau égalisateur 13 puis refroidie à l'air libre en aval de ce rouleau.

La face destinée à constituer la face visible de la bande transporteuse 5 est alors dégraissée afin d'éliminer les salissures solides et/ou liquides notamment les résidus gras provenant de la fabrication du revêtement en polyuréthane. Cette couche subit alors un traitement par laser excimère de façon à en augmenter l'énergie de surface. Après cette opération, une image numérique créée au préalable est alors transmise par ordinateur à un traceur qui en réalise une impression par jets d'encre sur la face traitée. La couche d'encre projetée est séchée sous atmosphère contenant de l'oxygène ou par rayonnement ultraviolet et selon la nature de cette encre.

Après refroidissement de la bande transporteuse dans un courant d'air à température inférieure ou voisine de la température ambiante, une couche d'un vernis protecteur incolore est appliquée sur la couche d'encre, celle-ci étant séchée par rayonnement.

Afin de solidariser la bande transporteuse 5 à la bande support 2, on applique tout d'abord, tel que visible à la figure 4, une bandelette adhésive unique 14 à la fois sur une portion de la bande 5 transporteuse, portion située à l'une des extrémités de celle-ci, à savoir l'extrémité 15, et sur une portion de la face externe de la bande support 2. Cette bandelette 14 ne présente qu'une seule face adhésive. Elle couvre transversalement la totalité de la largeur de ces bandes et s'étend longitudinalement sur une longueur d'environ 1 à 2 cm sur la bande transporteuse et sur une longueur de 3 à 5 cm sur la bande support.

Dans la direction longitudinale, on tend alors la bande transporteuse sur la face externe de la bande support et on amène la seconde extrémité de cette bande transporteuse à savoir l'extrémité 16 en juxtaposition avec l'extrémité 15, seule l'épaisseur de la bandelette 14 séparant ces deux extrémités. On applique ensuite, sur la face externe de la bande transporteuse, une bandelette adhésive 17, analogue à la bandelette 14, laquelle couvre la largeur totale des bandes transporteuse et support dans la direction transversale et sensiblement la longueur de la bandelette 14 dans la direction longitudinale.

La bande transporteuse ainsi installée peut être désinstallée par arrachage de la bandelette 17 puis de la bandelette 14 et élimination de cette bande.

Le procédé de l'invention ainsi décrit peut être mis en oeuvre en un temps minimum ne dépassant pas généralement 45 minutes. En outre, ce procédé est d'une grande simplicité puisqu'il ne prévoit qu'une surface minimum de la bande support et de la bande transporteuse nécessaire à leur solidarisation. Corollairement, cette surface minimum s'est révélée incapable d'engendrer des tensions et déformations lors du défilement de l'ensemble formé par ces bandes. D'autre part, ce procédé évite l'utilisation de matériaux adhésifs capables de souiller la bande support lors de la désinstallation de la bande transporteuse

## Revendications

1. Procédé pour l'installation et la désinstallation d'une bande transporteuse (5) sur des rouleaux d'entraînement (1) par l'intermédiaire d'une bande support (2) sans fin tendue sur ces rouleaux d'entraînement, en particulier une bande transporteuse d'un comptoir caisse, en vue d'assurer un défilement de cette bande transporteuse laquelle présente une face externe, une face interne et deux extrémités transversales (15 ; 16), **caractérisé en ce que** l'on réalise l'installation par l'intermédiaire de la face externe de la bande support, de la face externe de la bande transporteuse et de moyens de jonction.

2. Procédé selon la revendication 1, **caractérisé en ce que** pour réaliser l'installation, on solidarise entre elles la bande transporteuse et la bande support par l'intermédiaire de leur face externe et d'un moyen de jonction faisant charnière entre ces deux bandes.

3. Procédé selon la revendication 1 ou 2, **caractérisé en ce que** le moyen de jonction faisant charnière est représenté par au moins une bande adhésive.

4. Procédé selon l'une des revendications 1 à 3, **caractérisé en ce que** pour réaliser l'installation la bande transporteuse étant solidarisée à la bande support, les deux extrémités transversales de cette bande transporteuse sont elles-mêmes solidarisées entre elles par l'intermédiaire d'un moyen de jonction appliqué sur la face externe de cette bande et chevauchant ces extrémités juxtaposées.

5. Procédé selon la revendication 4 **caractérisé en ce que** le moyen de jonction est représenté par au moins une bandelette adhésive.

6. Procédé selon la revendication 3 ou 5, **caractérisé en ce que** les bandelettes adhésives sont posées sur des zones planes de la face externe de la bande support et de la face externe de la bande transporteuse.

7. Procédé selon l'une des revendications 1, 2 ou 5, **caractérisé en ce que** l'on solidarise entre elles la bande transporteuse et la bande support par application d'une bandelette adhésive (14) chevauchant à la fois une première portion de la face externe de cette bande transporteuse, cette première portion étant située à l'une des extrémités (15) transversales de cette bande transporteuse, et une portion de la face externe de cette bande support.

8. Procédé selon la revendication 7, **caractérisé en ce que** la longueur cumulée de la première portion de face externe de la bande transporteuse et de la portion de face externe de la bande support équivaut au maximum à la longueur du diamètre des rouleaux d'entraînement.

9. Procédé selon l'une des revendications 4 à 6, **caractérisé en ce que**, la bande transporteuse étant solidarisée à la bande support et tendue longitudinalement sur celle-ci et les deux extrémités transversales (15 ; 16) de cette bande transporteuse étant amenées en juxtaposition, on solidarise entre elles lesdites extrémités transversales par application, sur la face externe de ladite bande transporteuse, d'une bandelette adhésive (17) chevauchant ces deux extrémités transversales et recouvrant une deuxième et une troisième portion de cette face externe déterminées respectivement à ces deux extrémités transversales.

10. Procédé selon la revendication 9, **caractérisé en ce que** la longueur cumulée des deuxième et troisième portions de la face externe de la bande transporteuse équivaut au maximum à la longueur du diamètre des rouleaux d'entraînement.

11. Procédé selon l'une des revendications 1 à 10, **caractérisé en ce que**, pour réaliser la désinstallation, on arrache les bandes adhésives puis on élimine la bande transporteuse.

12. Procédé selon la revendication 1, **caractérisé en ce que** :
A) pour réaliser l'installation :
a) l'on solidarise entre elles la bande transporteuse et la bande support par application d'une bandelette adhésive (14) chevauchant à la fois une première portion de la face externe de cette bande transporteuse, cette première portion étant située à l'une des extrémités (15) transversales de cette bande transporteuse, et une portion de la face externe de cette bande support,
b) la bande transporteuse étant solidarisée à la bande support et tendue longitudinalement sur celle-ci et les deux extrémités transversales (15 ; 16) de cette bande transporteuse étant amenées en juxtaposition, on solidarise entre elles lesdites extrémités transversales par application, sur la face externe de ladite bande transporteuse, d'une bandelette adhésive (17) chevauchant ces deux extrémités transversales et recouvrant une deuxième et une troisième portion de cette face externe déterminées respectivement à ces deux extrémités transversales,
B) pour réaliser la désinstallation, on enlève les bandes adhésives puis on élimine la bande transporteuse.

13. Procédé selon l'une des revendications 1 à 12, **caractérisé en ce que** la bande support comprend, appliqué sur une feuille support (3), un revêtement (4) de chlorure de polyvinyle qui définit la face externe de cette bande support.

14. Procédé selon l'une des revendications 1 à 13, **caractérisé en ce que** la bande transporteuse comprend, appliqué sur une feuille support (6), un revêtement (7) de polyuréthane qui définit la face externe de cette bande transporteuse.

15. Procédé selon l'une des revendications 1 à 13, **caractérisé en ce que** le revêtement de polyuréthane est obtenu à partir de polyuréthane sous forme de pâte déposée sur la feuille support.

## Revendications modifiées

### Revendications modifiées conformément à la règle 137(2) CBE.

**1.** Procédé pour l'installation et la désinstallation d'une bande transporteuse (5) sur des rouleaux d'entraînement (1) par l'intermédiaire d'une bande support (2) sans fin tendue sur ces rouleaux d'entraînement, en particulier une bande transporteuse d'un comptoir caisse, en vue d'assurer un défilement de cette bande transporteuse laquelle présente une face externe, une face interne et deux extrémités transversales (15 ; 16), **caractérisé en ce que**, pour réaliser l'installation, on solidarise entre elles la bande transporteuse et la bande support par l'intermédiaire de leurs faces externes et d'un moyen de jonction faisant charnière entre ces deux bandes, les deux extrémités transversales de ladite bande transporteuse étant elles-mêmes solidarisées entre elles par l'intermédiaire d'un moyen de jonction appliqué sur la face externe de cette bande et chevauchant ces extrémités juxtaposées.

**2.** Procédé selon la revendication 1, **caractérisé en ce que** le moyen de jonction est représenté par au moins une bande adhésive.

**3.** Procédé selon la revendication 2, **caractérisé en ce que** les bandelettes adhésives sont posées sur des zones planes de la face externe de la bande support et de la face externe de la bande transporteuse.

**4.** Procédé selon l'une des revendications 1 à 3, **caractérisé en ce que** l'on solidarise entre elles la bande transporteuse et la bande support par application d'une bandelette adhésive (14) chevauchant à la fois une première portion de la face externe de cette bande transporteuse, cette première portion étant située à l'une des extrémités (15) transversales de cette bande transporteuse, et une portion de la face externe de cette bande support.

**5.** Procédé selon la revendication 4, **caractérisé en ce que** la longueur cumulée de la première portion de face externe de la bande transporteuse et de la portion de face externe de la bande support équivaut au maximum à la longueur du diamètre des rouleaux d'entraînement.

**6.** Procédé selon l'une des revendications 1 à 5, **caractérisé en ce que**, la bande transporteuse étant solidarisée à la bande support et tendue longitudinalement sur celle-ci et les deux extrémités transversales (15 ; 16) de cette bande transporteuse étant amenées en juxtaposition, on solidarise entre elles lesdites extrémités transversales par application, sur la face externe de ladite bande transporteuse, d'une bandelette adhésive (17) chevauchant ces deux extrémités transversales et recouvrant une deuxième et une troisième portion de cette face externe déterminées respectivement à ces deux extrémités transversales.

**7.** Procédé selon la revendication 6, **caractérisé en ce que** la longueur cumulée des deuxième et troisième portions de la face externe de la bande transporteuse équivaut au maximum à la longueur du diamètre des rouleaux d'entraînement.

**8.** Procédé selon l'une des revendications 1 à 7, **caractérisé en ce que**, pour réaliser la désinstallation, on arrache les bandelettes adhésives puis on élimine la bande transporteuse.

**9.** Procédé selon l'une des revendications 1 à 8, **caractérisé en ce que** :
A) pour réaliser l'installation :
a) l'on solidarise entre elles la bande transporteuse et la bande support par application d'une bandelette adhésive (14) chevauchant à la fois une première portion de la face externe de cette bande transporteuse, cette première portion étant située à l'une des extrémités (15) transversales de cette bande transporteuse, et une portion de la face externe de cette bande support,
b) la bande transporteuse étant solidarisée à la bande support et tendue longitudinalement sur celle-ci et les deux extrémités transversales (15 ; 16) de cette bande transporteuse étant amenées en juxtaposition, on solidarise entre elles lesdites extrémités transversales par application, sur la face externe de ladite bande transporteuse, d'une bandelette adhésive (17) chevauchant ces deux extrémités transversales et recouvrant une deuxième et une troisième portion de cette face externe déterminées respectivement à ces deux extrémités transversales,
B) pour réaliser la désinstallation, on enlève les bandelettes adhésives puis on élimine la bande transporteuse.

**10.** Procédé selon l'une des revendications 1 à 9, **caractérisé en ce que** la bande support comprend, appliqué sur une feuille support (3), un revêtement (4) de chlorure de polyvinyle qui définit la face externe de cette bande support.

**11.** Procédé selon l'une des revendications 1 à 10, **caractérisé en ce que** la bande transporteuse comprend, appliqué sur une feuille support (6), un revêtement (7) de polyuréthane qui définit la face externe de cette bande transporteuse.

**12.** Procédé selon la revendication 11, **caractérisé en ce que** le revêtement de polyuréthane est obtenu à partir de polyuréthane sous forme de pâte déposée sur la feuille support.
